# EUROPEAN PATENT SPECIFICATION

(11) **EP 1 536 209 B1**
(45) Date of publication and mention of the grant of the patent: **25.05.2016**
(21) Application number: 04025224.9
(22) Date of filing: 22.10.2004
(51) Int. Cl.: G01D 7/00, G01D 3/024, G01P 1/08

(54) **Engine condition indicating device for vehicles**
Betriebszustandsanzeige für Fahrzeuge
Dispositif d'indication de l'état de fonctionnement d'un moteur d'un vehicle

(30) Priority: 28.11.2003 JP 2003400616
(43) Date of publication of application: 01.06.2005
(73) Proprietor: Yamaha Hatsudoki Kabushiki Kaisha, Shizuoka-ken Shizuoka 438-8501 (JP)
(72) Inventor: Kawanishi, Masaru, Hamamatsu-shi Shizuoka-ken (JP); Okuyama, Takashi, Hamamatsu-shi Shizuoka-ken (JP)
(74) Representative: Grünecker Patent- und Rechtsanwälte PartG mbB

(56) References cited:
- EP-A1- 0 810 121
- WO-A1-99/45399
- DE-A1- 3 309 802
- DE-C1- 19 533 829
- US-A- 5 374 917
- US-A1- 2003 093 196

## Description

The present invention relates to a vehicle, in particular a boat, with an engine and an engine condition indicating device according to the preamble of independent claim 1. A related engine condition indicating device can be taken from the prior art document US 5,374,917.

Some conventional vehicles, in particular boats, equipped with an engine such as an outboard motor are provided with an indicator for indicating, in an analog manner, condition data values representing engine conditions, such as engine oil pressure, engine cooling water temperature and engine rotational speed.

Therein, as known, e.g. from JP-A-Hei 6-27978, the indicator is provided, in its indicating section, with an area where a warning upper limit value, a warning lower limit value and an appropriate range are shown.

In such conventional outboard motors, however, the upper and lower limit values of an appropriate range (normal range) and the lower limit value of an abnormal range generally differ depending on the engine. For example, an engine of a first type may have a normal range of 45 °C to 65 °C and an abnormal range of 85 °C and more for engine cooling water temperature, while an engine of a second type may have a normal range of 55 °C to 75 °C and an abnormal range of 95 °C and more for engine cooling water temperature. Thus, when an engine is replaced with an engine of a different type with the same indicator used before and after the replacement, there occasionally arises a problem of inappropriate indication due to the difference between the engines, such as: an indication in the abnormal range where it is not actually abnormal, and an indication in the normal range where it should actually be abnormal. When a new outboard motor is installed, it need be associated with the indicator. Even if there are provided a number of types of indicators, which may not be associated with the outboard motor with accuracy, there still may arise a problem of inappropriate indication.

It is an object of the present invention to provide an improved vehicle with an engine and an engine condition indicating device as indicated above that can be easily adapted to a plurality of different types of engines.

According to the present invention said object is solved by a vehicle with an engine and an engine condition indicating device having the features of independent claim 1.

Further preferred embodiments are subject to the respective subclaims.

In the following, the invention will be described in greater detail by means of preferred embodiments thereof with reference to the attached drawings, wherein:
- FIG. 1: is a perspective view of a boat according to an embodiment of the present invention and illustrates the subject matter of the independent claim;
- FIG. 2: is a front view of an indicator according to the embodiment;
- FIG. 3: is an enlarged view of an engine condition indicating section of the indicator according to the embodiment;
- FIG. 4: is a block diagram of an engine condition indicating device for a boat according to the embodiment; and
- FIG. 5: is a block diagram of an engine condition indicating device for a boat according to a second embodiment wherein same does not illustrate the subject matter of the independent claim.

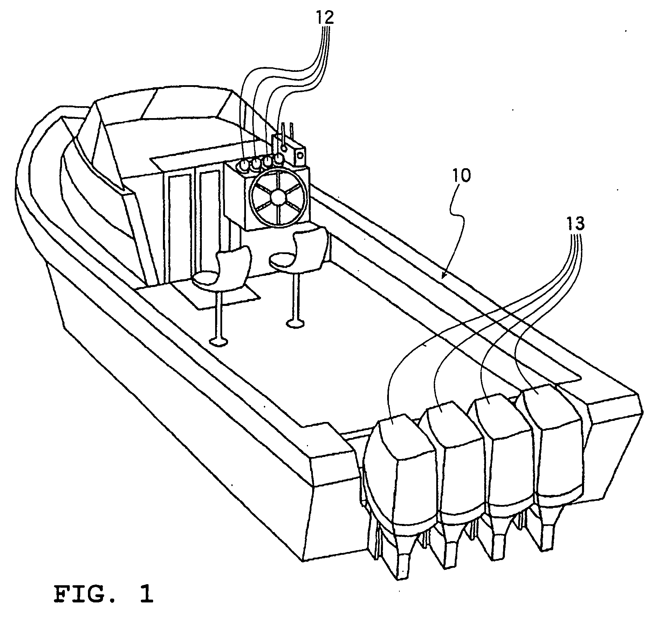

FIGs. 1 through 4 show a first embodiment of the invention and illustrates the subject matter of the independent claim.

The configuration is first described. In FIG. 1, reference numeral 10 denotes a hull. Four indicators 12 are provided at the front of a operator's seat on the hull 10, and four outboard motors 13 are provided at the rear of the hull 10. These multiple outboard motors 13 and indicators 12 are connected via a LAN (Local Area Network). There is provided an engine condition indicating device 11 including the indicators 12 for indicating engine conditions (oil pressure conditions in this embodiment).

Of course, a different number of engines, such as, e.g. outboard motors, or even electric motors or drive units of a different type, and a corresponding number of indicators can be provided, too. It is possible to have only one motor and one indicator, or two, or three or more motors and the corresponding number of indicators provided at the boat.

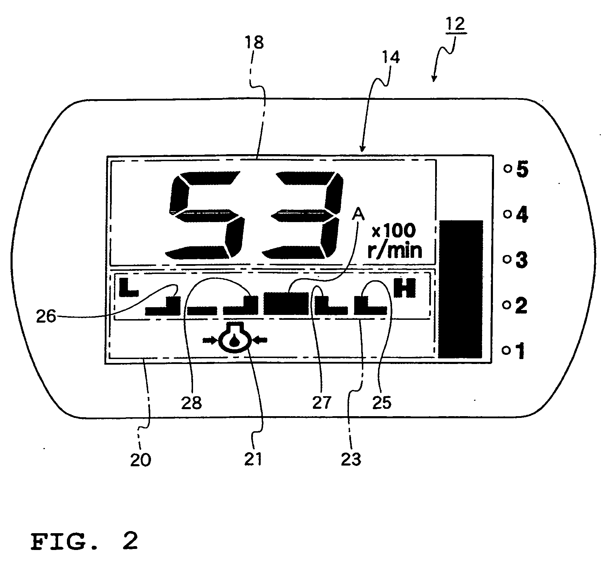

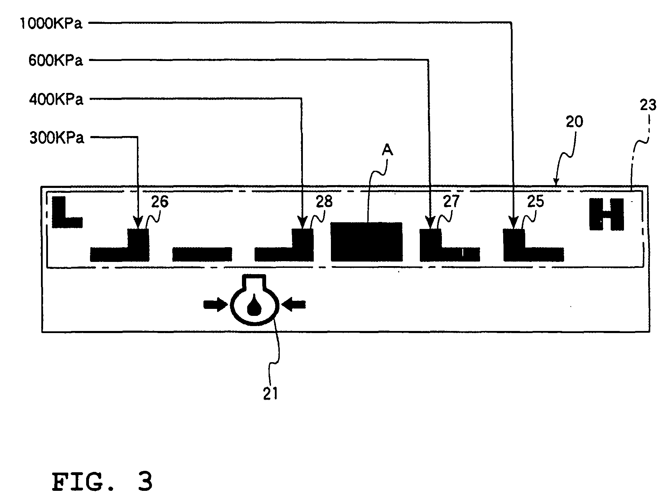

The indicators 12 are each provided with an indicating section 14 for indicating various data such as engine speed and cooling water temperature, as shown in FIGs. 2 and 3.

As shown in FIG. 2, the indicating section 14 is generally made up of a engine speed indicating section 18 for indicating engine speed, and an engine condition indicating section 20 for indicating engine oil pressure, for example, of the outboard motor 13.

The engine condition indicating section 20 is adapted to display an oil pressure mark 21, and provided with an oil pressure indicating section 23 for indicating a condition data value of engine oil pressure at a predetermined position in its indication area.

In the indication area of the oil pressure indicating section 23 are provided a warning upper limit position 25 and a warning lower limit position 26. The ranges above the warning upper limit position 25 and below the warning lower limit position 26 are set as warning ranges. Between the warning upper limit position 25 and the warning lower limit position 26 are provided a safe range upper limit position 27 and a safe range lower limit position 28. The range between the safe range upper limit position 27 and the safe range lower limit position 28 is set as a safe range.

Engines 22 each preserve in their storage section indication information preset with condition values (engine oil pressure values in this embodiment) corresponding to the warning upper limit position 25, the warning lower limit position 26, the safe range upper limit position 27 and the safe range lower limit position 28, of the indication area. The indication information of the engines 22 as indication objects is set as follows, for example. A warning upper limit value as a condition value corresponding to the warning upper limit position 25 is set to an oil pressure of 1000 kPa, and a warning lower limit value as a condition value corresponding to the warning lower limit position 26 is set to an oil pressure of 300 kPa. Also, a safe range upper limit value as a condition value corresponding to the safe range upper limit position 27 is set to an oil pressure of 600 kPa, and a safe range lower limit value as a condition value corresponding to the safe range lower limit position 28 is set to an oil pressure of 400 kPa. Engines 22 of another model store indication information set with condition values (engine oil pressure values) different from those above for the warning upper limit position 25, the warning lower limit position 26, the safe range upper limit position 27 and the safe range lower limit position 28.

Such indication information of the engines 22 as indication objects is transmitted to the indicators 12 via the LAN. In the indicator 12, the condition data value transmitted from the engine 22 as its indication object is processed based on the indication information, and indicated at a predetermined position in the indication area of the indicating section 14.

The operation is described next.

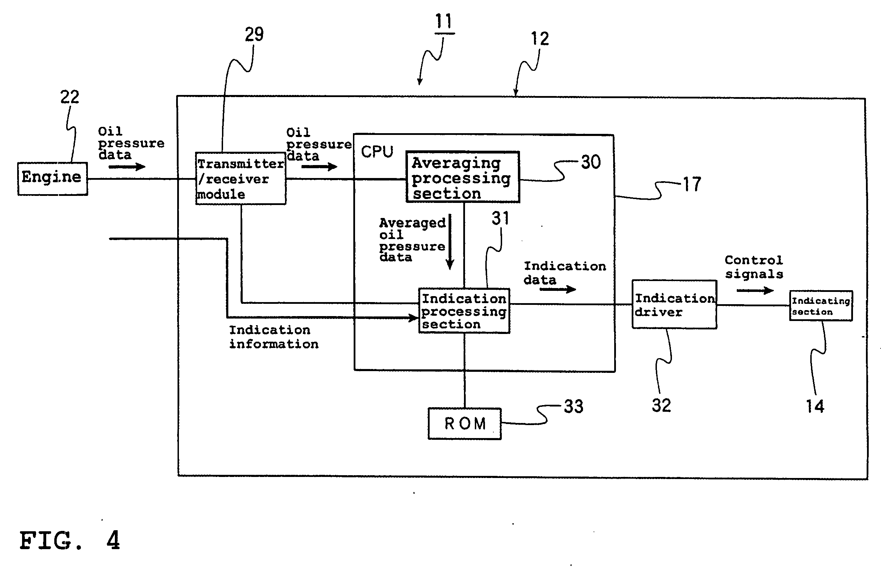

When the engine of the outboard motor 13 is in driving condition, as shown in FIG. 4, oil pressure data is transmitted from the engine of the outboard motor 13 to the indicator 12 via the LAN, and inputted into an averaging processing section 30 of a central processing unit (CPU) 17 through a transmitter/receiver module 29 of the indicator 12. Then, an oil pressure data value, obtained as an averaged condition data value, is inputted into an indication processing section 31.

In the meantime, indication information of the engine of the outboard motor 13 as an indication object is also inputted into the indication processing section 31 through a transmitter/receiver module 29 of the outboard motor 13.

The indication processing section 31 processes the oil pressure data value based on the indication information, and indication data obtained is transmitted to an indication operator 32, from which control signals are transmitted to the indicating section 14 for indication thereon.

In this embodiment, the indication processing section 31 compares the oil pressure data value with the warning upper limit value and the like described above of the indication information, determines which position, in the warning range or safe range, the oil pressure data value falls on, and displays a data indication (A) at a predetermined position in the engine condition indicating section 20 of the indicating section 14.

Specifically, when oil pressure data of 500 kPa, for example, is inputted into the indication processing section 31, the data indication (A) by the oil pressure data (500 kPa) is displayed within the safe range, as shown in FIGs. 2 and 3. This is because the value is between the safe range upper limit value (600 kPa) and the safe range lower limit value (400 kPa). The indication A allows an operator of the boat to instantly recognize what range the oil pressure data value is in.

With this configuration, even when the engine 22 is replaced with a counterpart of a different model with respect to the indicator 12, automatic setting of the indication range and the like utilizing indication information of the engine 22 as an indication object allows appropriate indication for engines 22 with different characteristics.

Also, in this embodiment, a warning upper limit position 25 and a warning lower limit position 26 are set in the indication area of the indicating section 14, and a safe range upper limit position 27 and a safe range lower limit position 28 are set between the warning upper limit position 25 and the warning lower limit position 26. Therefore, engine conditions can be recognized more accurately.

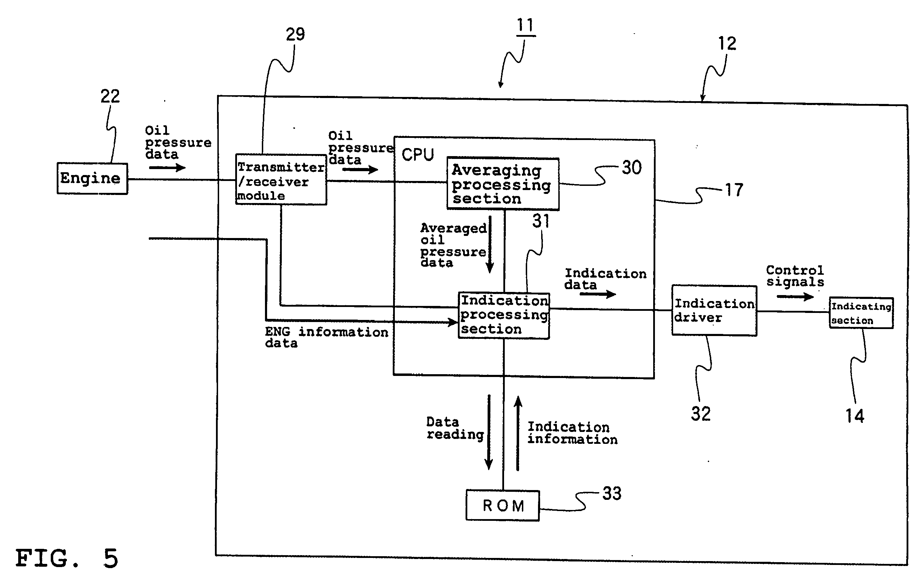

Fig. 5 shows a second embodiment of the present teaching.

In the first embodiment as described above, indication information of the engines 22 is stored in the respective engines 22, and transmitted to the indicators 12. In Embodiment 2, however, plural pieces of indication information corresponding to engines 22 of plural different models are stored in a storage section (ROM) 33 of the indicators 12.

Engine model information is inputted into the indication processing section 31 from the engine 22 as an indication object associated with the indicator 12 through the transmitter/receiver module 29. Based on the engine model information, the indication processing section 31 reads a predetermined piece of indication information from the plural pieces of indication information of the engines 22 stored in the ROM 33.

Then, the indication processing section 31 processes the oil pressure data value based on the indication information of the engine 22 as an indication object associated with the indicator 12, and indication data obtained is transmitted to the indication operator 32, from which control signals are transmitted to the indicating section 14 for indication thereon.

The rest of the configuration and operation is the same as in the first embodiment, and redundant description is not repeated.

In the description of the above embodiments, engine oil pressure is indicated. However, the present teaching is not limited thereto, but cooling water temperature, engine rotational speed, etc. may be indicated in the same manner.

Also, in the above embodiments, a warning upper limit position 25 and a warning lower limit position 26 are set in the indication area of the indicating section 14, and a safe range upper limit position 27 and a safe range lower limit position 28 are set between the warning upper limit position 25 and the warning lower limit position 26. However, the present teaching is not limited thereto, and either the warning upper limit position or the warning lower limit position and/or either the safe range upper limit position or the safe range lower limit position may be set, since condition data values of different types may require different warning ranges and/or safe ranges.

Further, the number of the indicators 12 and the outboard motors 13 is four each in the above embodiments. However, the present teaching is not limited thereto, and the number may be one each, or any number without the limitation of the above number, four.

Of course, the present teaching is not limited to a boat, but may be directed to any kind of vehicle being suitable for having engines of different types attached thereto. It is also possible to provide a desired number of indicators, wherein one indicator is capable of being suitable for operating for more than one engine or drive unit.

As described before, an engine condition indicating device, in particular for a boat, is provided for indicating a condition data value such as oil pressure detected on the side of an engine as an indication object at a predetermined position in an indication area of an indicating section, wherein indication information including a condition value of the engine as an indication object is preset, the condition value being determined in association with the indication area; and wherein the condition data value transmitted from the engine as an indication object is processed based on the indication information to be displayed at a predetermined position in the indication area of the indicating section.

In the engine condition indicating device for a boat, preferably a warning upper limit position, a warning lower limit position, a safe range upper limit position and a safe range lower limit position are set in the indicating section of the indication area.

More preferably, the condition data value represents engine oil pressure, engine cooling water temperature, or engine speed.

According to the invention, the indication information is stored on the engine side.

Of course, information on the type of engine, such as engine name, model, and/or specification values can be indicated on the basis of the information stored, too.

As further explained above, the present invention provides an engine condition indicating device for a boat, capable of automatically adjusting the indication range of condition data values of different engines to the range of an indicating section for appropriately positioned indication.

In more detail, an engine condition indicating device, in particular for a boat, is provided for indicating a condition data value such as oil pressure detected on the side of an engine as an indication object at a predetermined position in an indication area of an indicating section, wherein indication information including a condition value of the engine as an indication object is preset, the condition value being determined in association with the indication area; and the condition data value transmitted from the engine as an indication object is processed based on the indication information to be displayed at a predetermined position in the indication area of the indicating section.

Therein, preferably a warning upper limit position, a warning lower limit position, a safe range upper limit position and a safe range lower limit position are set in the indicating section of the indication area.

More preferably, the condition data value represents engine oil pressure, engine cooling water temperature, or engine speed.

More preferably, the indication information is stored on the engine side.

According to the present teaching, indication information including a condition value, determined in association with the indication area, of the engine as an indication object is preset; and the condition data value transmitted from the engine as an indication object is processed based on the indication information to be displayed at a predetermined position in the indication area of the indicating section. Therefore, even when the engine is replaced with a counterpart of a different model with respect to the indicator, automatic setting of the indication range and the like utilizing indication information of the engine as an indication object allows appropriate indication for engines with different characteristics.

Further, a warning upper limit position, a warning lower limit position, a safe range upper limit position and a safe range lower limit position are set in the indicating section of the indication area. Therefore, engine conditions can be recognized more accurately.

As described before, an engine condition indicating device for a boat, capable of automatically adjusting the indication range of condition data values of different engines to the range of an indicating section for appropriately positioned indication is provided. In more detail, an engine condition indicating device 11 for a boat, for indicating a condition data value such as engine oil pressure detected on the side of an engine as an indication object at a predetermined position in an indication area of an indicating section 14 is provided, wherein indication information including a condition value, determined in association with the indication area, of the engine 22 as an indication object is preset; and the condition data value transmitted from the engine 22 as an indication object is processed based on the indication information to be displayed at a predetermined position in the indication area of the indicating section 14.

In other words, the present teaching provides an engine condition indicating device, in particular for a boat, capable of indicating a condition data value of an engine of various types of engines at a predetermined position in an indication area of an indicating section, and of indicating an indication information including a condition value information of the engine in the indication area, the condition value information being determined in association with the indication area and a specification of the engine.

## Claims

1. A vehicle, in particular a boat, with an engine and an engine condition indicating device for indicating an engine condition data value (A) at an indication section (14) being configured to automatically adapt to different types of engines (22), wherein the condition data value (A) is indicated at a predetermined position in an indication area (20) of the indication section (14), and in that an indication information including a condition value information (25,26,27,28) of the engine (22) is indicated in the indication area (20), the condition value information (25,26,27,28) being determined in association with the indication area (20) and a specification of the engine (22), condition value information (25,26,27,28) includes information on a minimum, an optimum and/or a maximum value of the condition data value (A) of said engine (22), **characterized in that**
said condition value information (25,26,27,28) is stored on an engine side of an information transmitting means being a local area network and transmitted to the indication section (14) by the local area network.

2. A vehicle according to claim 1, **characterized in that** an indication range of the condition data value (A) at the indication section (14) is automatically adjusted according to the engine (22).

3. A vehicle according to claim 1 or 2, **characterized in that** the condition data value (A) represents engine oil pressure, an engine cooling water temperature, and/or an engine speed.

4. A vehicle according to at least one of the claims 1 to 3, **characterized in that** the condition value information (25,26,27,28) includes a condition range information for an automatic setting and indicating of an indication range as an indication object within the indication area (20) of the indicating section (14).

5. A vehicle according to at least one of the claims 1 to 4, **characterized in that** the condition value information (25,26,27,28) includes information on a warning upper limit position (25), a warning lower limit position (26), a safe range upper limit position (27) and/or a safe range lower limit position (28) as indication objects within the indication area (20) of the indicating section (14).

6. A vehicle according to at least one of the claims 1 to 5, **characterized in that** the indication information includes a condition type information for an automatic indication of a condition type symbol (21) as an indication object within the indication area (20) of the indicating section (14).

7. A vehicle according to at least one of the claims 1 to 6, **characterized in that** the condition data value is transmitted from the engine (22), preferably via a network, such as a local area network, is processed in a central processing unit (17) based on the indication information, and is indicated at a predetermined position in the indication area (20) of the indicating section (14), preferably together with the indicating information.

8. A vehicle according to at least one of the claims 1 to 7, **characterized in that** the indication section (14) comprises a plurality of indication areas (18,20) being configured to indicate one ore more different kinds of condition data values (A), such as engine oil pressure, an engine cooling water temperature, and/ or an engine speed, at the same time.

9. A vehicle according to at least one of the claims 1 to 8, **characterized in that** the indicator (12) comprises a selection element configured select one or more different kinds of condition data values (A) to be indicated within a particular indication area (20) of the indicating section (14).

## Patentansprüche

1. Ein Fahrzeug, insbesondere ein Boot, mit einem Motor und einer Motor-Zustands-Anzeigevorrichtung zum Anzeigen eines Motor-Zustands-Daten-Wert (A) in einem Anzeigeabschnitt (14), der konfiguriert ist, um automatisch an verschiedene Typen von Motoren (22) angepasst zu werden, wobei der Zustands-Daten-Wert (A) an einer vorgegebenen Position in einem Anzeigebereich (20) des Anzeigeabschnitts (14) angezeigt ist, und wobei eine Anzeige-Information, welche eine Zustands-Wert-Information (25, 26, 27, 28) des Motors (22) beinhaltet, in dem Anzeigebereich (20) angezeigt ist, die Zustands-Wert-Information (25, 26, 27, 28) ist bestimmt in Übereinstimmung mit dem Anzeigebereich (20) und einer Spezifikation des Motors (22), Zustands-Wert-Information (25, 26, 27, 28) beinhaltet Informationen zu einem Minimum-, einem Optimum- und/oder einem Maximum-Wert des Zustands-Daten-Wertes (A) von diesem Motor (22), **dadurch gekennzeichnet, dass**
diese Zustands-Wert-Information (25, 26, 27, 28) in einer Motor-Seite einer Informations-Übertragungseinrichtung gespeichert ist, die ein lokales Netzwerk ist und zu dem Anzeigeabschnitt (14) durch das lokale Netzwerk übertragen ist.

2. Ein Fahrzeug gemäß Anspruch 1, **dadurch gekennzeichnet, dass** ein Anzeigebereich des Zustands-Daten-Wertes (A) in dem Anzeigeabschnitt (14) automatisch gemäß dem Motor (22) angepasst ist.

3. Ein Fahrzeug gemäß Anspruch 1 oder 2, **dadurch gekennzeichnet, dass** der Zustands-Daten-Wert (A) einen Motor-Öl-Druck, eine Motor-Kühlwasser-Temperatur und/oder eine Motor-Drehzahl repräsentiert.

4. Ein Fahrzeug gemäß zumindest einem der Ansprüche 1 bis 3, **dadurch gekennzeichnet, dass** die Zustands-Wert-Information (25, 26, 27, 28) eine Zustands-Bereichs-Information beinhaltet, zum automatischen Setzen und Anzeigen eines Anzeigebereichs als ein Anzeigeobjekt in dem Anzeigebereich (20) des Anzeigeabschnitts (14).

5. Ein Fahrzeug gemäß zumindest einem der Ansprüche 1 bis 4, **dadurch gekennzeichnet, dass** die Zustands-Wert-Information (25, 26, 27, 28) eine Information zu einer Warnung-Ober-Grenzposition (25), einer Warnung-Unter-Grenzposition (26), einer Sicher-Bereich-Ober-Grenzposition (27) und/oder einer Sicher-Bereich-Unter-Grenzposition (28) als Anzeigeobjekte in dem Anzeigebereich (20) des Anzeigeabschnitts (14) beinhaltet.

6. Ein Fahrzeug gemäß zumindest einem der Ansprüche 1 bis 5, **dadurch gekennzeichnet, dass** die Anzeige Information eine Zustands-Typ-Information zu einem automatischen Anzeigen eines Zustands-Typ-Symbols (21) als ein Anzeigeobjekt in dem Anzeigebereich (20) des Anzeigeabschnitts (14) beinhaltet.

7. Ein Fahrzeug gemäß zumindest einem der Ansprüche 1 bis 6, **dadurch gekennzeichnet, dass** der Zustands-Daten-Wert, der von dem Motor (22), bevorzugt über ein Netzwerk, wie ein lokales Netzwerk, übertragen ist, in einer zentralen Verarbeitungseinheit (17) auf Grundlage der Anzeige-Information verarbeitet ist, und an einer vorgegebenen Position in dem Anzeigebereich (20) des Anzeigeabschnitts (14), bevorzugt zusammen mit der Anzeige-Information, angezeigt ist.

8. Ein Fahrzeug gemäß zumindest einem der Ansprüche 1 bis 7, **dadurch gekennzeichnet, dass** der Anzeigeabschnitt (14) eine Mehrzahl von Anzeigebereiche (18, 20) umfasst, die konfiguriert sind, um eine oder mehrere unterschiedliche Arten von Zustands-Daten-Werten (A) anzuzeigen, wie Motor-Öl-Druck, eine Motor-Kühlwasser-Temperatur, und/oder eine Motor-Drehzahl zur selben Zeit.

9. Ein Fahrzeug gemäß zumindest einem der Ansprüche 1 bis 8, **dadurch gekennzeichnet, dass** der Anzeiger (12) ein Auswahl-Element umfasst, konfiguriert, um ein oder mehrere unterschiedliche Arten von Zustands-Daten-Werten (A) auszuwählen, die in einem bestimmten Anzeigebereich (20) des Anzeigeabschnitts (14) anzuzeigen sind.

## Revendications

1. Véhicule, en particulier bateau, ayant un moteur et un dispositif d'indication de l'état du moteur pour indiquer une valeur de données d'état du moteur (A) à une section indicatrice (14) configurée pour s'adapter automatiquement à différents types de moteurs (22), la valeur de données d'état (A) étant indiquée à une position prédéterminée dans une zone indicatrice (20) de la section indicatrice (14), et en ce qu'une information indicatrice comprenant une information de valeur d'état (25, 26, 27, 28) du moteur (22) est indiquée dans la zone indicatrice (20), l'information de valeur d'état (25, 26, 27, 28) étant déterminée en association à la zone indicatrice (20) et une caractéristique technique du moteur (22), une information de valeur d'état (25, 26, 27, 28) comprend l'information sur une valeur minimale, optimale et/ou maximale de la valeur de données d'état (A) dudit moteur (22), **caractérisé en ce que**
ladite information de valeur d'état (25, 26, 27, 28) est stockée sur un côté latéral du moteur d'un moyen de transmission d'information qui est un réseau local d'entreprise et transmise à la section indicatrice (14) par le réseau local d'entreprise.

2. Véhicule selon la revendication 1, **caractérisé en ce qu'**une plage d'indications de la valeur de données d'état (A) au niveau de la section indicatrice (14) est automatiquement ajustée en fonction du moteur (22).

3. Véhicule selon la revendication 1 ou 2, **caractérisé en ce que** la valeur de données d'état (A) représente la pression d'huile du moteur, une température d'eau de refroidissement du moteur, et/ou une vitesse du moteur.

4. Véhicule selon au moins l'une des revendications 1 à 3, **caractérisé en ce que** l'information de valeur d'état (25, 26, 27, 28) comprend une information de plage d'états pour une configuration automatique et indicatrice d'une plage d'indications telle qu'un objet indicateur à l'intérieur de la zone indicatrice (20) de la section indicatrice (14).

5. Véhicule selon au moins l'une des revendications 1 à 4, **caractérisé en ce que** l'information de valeur d'état (25, 26, 27, 28) comprend de l'information sur une position limite supérieure d'avertissement (25), une position limite inférieure d'avertissement (26), une position limite supérieure de plage de sécurité (27) et/ou une position limite inférieure de plage de sécurité (28) comme objets indicateurs à l'intérieur de la zone indicatrice (20) de la section indicatrice (14).

6. Véhicule selon au moins l'une des revendications 1 à 5, **caractérisé en ce que** l'information indicatrice comprend une information de type d'état pour une indication automatique d'un symbole de type d'état (21) comme objet indicateur à l'intérieur de la zone indicatrice (20) de la section indicatrice (14).

7. Véhicule selon au moins l'une des revendications 1 à 6, **caractérisé en ce que** la valeur de données d'état est transmise depuis le moteur (22), de préférence *via* un réseau, tel qu'un réseau local d'entreprise, est traitée dans une unité centrale de traitement (17) sur la base de l'information indicatrice, et est indiquée à une position prédéterminée dans la zone indicatrice (20) de la section indicatrice (14), de préférence conjointement à l'information indicatrice.

8. Véhicule selon au moins l'une des revendications 1 à 7, **caractérisé en ce que** la section indicatrice (14) comprend une pluralité de zones indicatrices (18, 20) configurée pour indiquer un ou plusieurs types différents de valeurs de données d'état (A), tels que la pression d'huile du moteur, une température d'eau de refroidissement du moteur, et/ou une vitesse du moteur, en même temps.

9. Véhicule selon au moins l'une des revendications 1 à 8, **caractérisé en ce que** l'indicateur (12) comprend un élément de sélection configuré pour sélectionner un ou plusieurs types différents de valeurs de données d'état (A) à indiquer à l'intérieur d'une zone indicatrice particulière (20) de la section indicatrice (14).
